# DEMANDE DE BREVET EUROPEEN

(11) **EP 0 957 620 A1**
(43) Date de publication de la demande: **17.11.1999**
(21) Numéro de dépôt: 98870107.4
(22) Date de dépôt: 14.05.1998
(51) Int. Cl.: H04M 3/50

(54) **Réseau et méthode pour la diffusion de messages**

(71) Demandeur: Gecofin SPRL, 1180 Bruxelles (BE); Alpha-Press S.C., 1140 Bruxelles (BE)
(72) Inventeur: Argyrakis, Georges, 07380 Lalevade d'Ardèche (FR)
(74) Mandataire: Vandeberg, Marie-Paule L.G.

(57) **Abrégé**

L'invention concerne un réseau de diffusion de messages (1) qui comprend
- un ensemble de une ou plusieurs sources (6) de messages susceptibles d'être gérées par un ou des producteurs de messages,
- un dispositif central (2) de collecte et d'envoi de messages, susceptible d'être géré par un opérateur,
- un réseau téléphonique (3),
- un ensemble de dispositifs de réception de messages (5) reliés chacun d'une part à une ligne téléphonique (7) d'un abonné au dit réseau téléphonique (3), et d'autre part à un poste téléphonique (4) du dit abonné.

L'invention porte également sur une méthode d'exploitation du dit réseau, sur le dit dispositif central (2) de collecte et d'envoi de messages, et sur les dits dispositifs de réception (5) de messages.

## Description

### Domaine technique

La présente invention concerne la diffusion de messages.

### Art antérieur et critique de cet art antérieur

Parmi les systèmes de diffusion de messages, on connaît bien sûr le service postal de distribution de courrier sous forme papier. Ce service est organisé très largement et son usage est profondément ancré dans nos habitudes. Il présente l'inconvénient d'un coût important par message transmis, et d'un délai d'acheminement d'un jour ou plus suivant les cas. Des variantes du système postal, exploitées par des sociétés privées, offrent un service plus rapide, mais d'un coût largement supérieur.

Des systèmes de courrier électronique sont connus de longue date, et rencontrent un succès croissant auprès d'un large public, tant pour une utilisation professionnelle que privée. Ces systèmes permettent de faire parvenir un message à un destinataire bien précis, ou à un ensemble de destinataires, pour un coût très modique. Pour l'utilisation d'un service de courrier électronique, le destinataire de messages doit cependant en général disposer d'un ordinateur personnel muni d'un modem, et former un appel téléphonique à destination d'un fournisseur de services. Une telle utilisation requiert donc un investissement en matériel non négligeable. Elle requiert également un savoir-faire dans l'utilisation et la mise en place de logiciels élaborés. Elle requiert en outre une démarche active de la part du destinataire des messages pour relever ceux-ci. Le coût de la communication téléphonique est donc à sa charge.

Le répondeur vocal, également bien connu, ne permet pas de sélectionner et consulter aisément et rapidement des messages anciens. Il se prête bien à l'envoi d'un message personnel à un destinataire, mais moins bien à la diffusion d'informations, éventuellement personnalisables, à un vaste ensemble de destinataires. La communication téléphonique doit être maintenue pendant toute la durée du message, ce qui peut présenter un inconvénient de coût pour les messages longs.

Dans le domaine de la téléphonie mobile, on connaît le système dit "Short messages system" (SMS) d'envoi et d'affichage de messages courts sur un téléphone portable. Ce système ne s'applique cependant pas à la téléphonie fixe. Il ne comprend pas de gestion intelligente des messages reçus. De plus la longueur des messages est limitée à 160 caractères.

### But de l'invention

La présente invention a précisément pour but de fournir un réseau et une méthode pour la diffusion de messages qui ne présentent pas les inconvénients mentionnés ci-dessus. Elle a pour but de fournir une méthode de diffusion de messages à un destinataire spécifique ou à un ensemble de destinataires, pour un coût très faible, tant en investissement initial qu'en coût d'exploitation, et dont l'utilisation ne requiert aucune habileté ou compétence particulière de la part du destinataire.

### Description

L'invention porte sur un réseau de diffusion de messages comportant
- un ensemble de une ou plusieurs sources de messages susceptibles d'être gérées par un ou des producteurs de messages,
- un dispositif central de collecte et d'envoi de messages, susceptible d'être géré par un opérateur,
- un réseau téléphonique,
- un ensemble de dispositifs de réception de messages reliés chacun d'une part à une ligne téléphonique d'un abonné au dit réseau téléphonique, et d'autre part à un poste téléphonique du dit abonné.

Le dit réseau téléphonique peut être un réseau analogique commuté, un réseau numérique RNIS, ou tout autre type de réseau téléphonique.

Par "source de messages", on comprendra dans la suite l'infrastructure informatique et technique permettant à un producteur de messages de faire parvenir les dits messages au dispositif central, et par producteurs de messages, on comprendra l'organisation ou la ou les personnes désireuses de transmettre des messages.

De même, par "dispositif central de collecte et d'envoi de messages", ou, en abrégé, "dispositif central" on comprendra l'infrastructure informatique et technique réalisant cette fonction, et par "opérateur", on entendra l'organisation ou la ou les personnes exploitant le dispositif central.

Par "poste téléphonique", on comprendra dans la suite un téléphone proprement dit, associé éventuellement à un télécopieur, un répondeur, un modem ou tout autre appareil de péritéléphonie. Par "abonné", on entendra un abonné à un réseau téléphonique.

L'invention porte également sur une méthode d'exploitation d'un réseau tel que décrit ci-dessus, comprenant les étapes suivantes:
- un producteur élabore un ensemble de messages à diffuser, chaque message étant accompagné d'un ou plusieurs numéros d'appel téléphonique de son ou ses destinataires, chaque message étant accompagné d'attributs qualifiant le type de traitement à effectuer par le dispositif central, et d'attributs qualifiant le type de traitement à effectuer par le ou les dispositifs de réception destinataires;
- le dispositif central collecte les messages à diffuser, et les mémorise dans une mémoire ;
- le dispositif central transmet les messages à leurs destinataires;
- dans le cas ou le dispositif de réception destinataire ne répond pas à l'appel, le dispositif central mémorise le fait qu'une nouvelle tentative d'envoi doit être effectuée dans un délai déterminé.

Les messages peuvent consister en données digitales et être transmis sur une liaison téléphonique en utilisant un protocole normalisé de transmission de données tels par exemple que ceux définis par les normes V.21, V.22, V22bis, Bell 212A ou Bell 103, ou les normes RNIS.

Les dispositifs de réception sont de préférence capables de discriminer les appels téléphoniques issus d'un dispositif central des autres appels téléphoniques. Cette discrimination peut être faite par exemple par l'émission de signaux d'identification, par le central téléphonique du réseau téléphonique , pendant la séquence d'appel de l'abonné, et la détection et le traitement de ceux-ci par le dispositif de réception. Ces signaux d'identification peuvent être émis sous forme de "frequency shift keying" (FSK). Cette discrimination peut également être faite par l'émission de signaux d'identification, par le dispositif central, après l'établissement d'une liaison téléphonique avec l'abonné. Lorsque le réseau téléphonique est un réseau téléphonique numérique RNIS, la discrimination peut être faite par le décodage du "Call Line Identification Presentation" (CLIP) par le dispositif de réception.

Dans le cadre de la méthode, l'opérateur est rémunéré par les producteurs de messages par une taxe dite "timbre téléphonique" déterminée en fonction du nombre de messages à transmettre, de leur longueur, et des types de traitement à leur appliquer.

L'invention porte encore sur les dispositifs de réception de messages à travers un réseau téléphonique, de mémorisation et d'affichage de ces messages, reliés d'une part à une ligne téléphonique, et d'autre part à un poste téléphonique d'abonné. Ces dispositifs peuvent comporter
- des moyens aptes à répondre à un appel téléphonique entrant,
- des moyens aptes à inhiber la sonnerie du poste téléphonique de l'abonné,
- des moyens aptes à discriminer si cet appel téléphonique entrant provient ou non d'un dispositif central,
- des moyens aptes à transférer un appel téléphonique ne provenant pas d'un dispositif central vers le poste téléphonique d'abonné,
- des moyens aptes à mémoriser dans un moyen de mémoire le message transmis lors d'un appel porteur d'un message,
- des moyens aptes à afficher ou restituer le dit message,
- des moyens permettant à l'utilisateur d'exécuter certaines commandes.

Le dispositif de réception peut comprendre des voyants destinés à informer l'utilisateur de l'état de celui-ci, tels que
- l'indication qu'un message a été reçu depuis la dernière consultation ;
- l'indication qu'un message est en cours de réception.

Le dispositif de réception peut être intégré au poste téléphonique ou à sa périphérie pour former un seul appareil. Il comporte de préférence des moyens permettant à l'abonné de former un appel téléphonique de manière habituelle et également d'interrompre la réception de messages en provenance du dispositif central afin de former un appel téléphonique d'urgence.

Dans une variante de l'invention, le dispositif de réception comporte des moyens permettant à l'abonné de commander l'envoi d'un message de réponse correspondant à un message reçu. Le destinataire et le contenu du message de réponse sont élaborés à partir de données contenues dans le message reçu correspondant. Ceci permet d'organiser par exemple un système de vote, dans lequel des messages contenant la liste des options, et le numéro d'appel du destinataire de la réponse sont envoyés aux votants. L'abonné sélectionne alors l'option choisie, encode éventuellement des données additionnelles, et commande l'envoi de sa réponse. Le dispositif de réception envoie alors ce message de réponse au numéro d'appel contenu dans le message. Ce numéro peut être celui du dispositif central ou directement celui du destinataire des réponses. Le message de réponse peut contenir des données telles que l'adresse de l'abonné ou son numéro d'appel.

L'invention porte enfin sur un dispositif central comprenant des moyens aptes à mémoriser un ensemble de messages, des moyens aptes à former un appel téléphonique à destination du poste téléphonique d'un abonné, et des moyens aptes a transmettre un message vers l'abonné au moyen d'un réseau téléphonique.

### Description des figures

D'autres caractéristiques et avantages de l'invention apparaîtront à la lecture de la description qui suit, référence étant faite aux figures annexées.
La figure 1 est une vue schématique d'un réseau de diffusion de messages suivant l'invention.
La figure 2 est une vue schématique du poste d'un abonné à un réseau téléphonique muni d'un dispositif de réception de messages suivant l'invention et d'un poste téléphonique, dans laquelle les échelles relatives des éléments ne sont pas respectées.

### Description détaillée d'un mode de réalisation

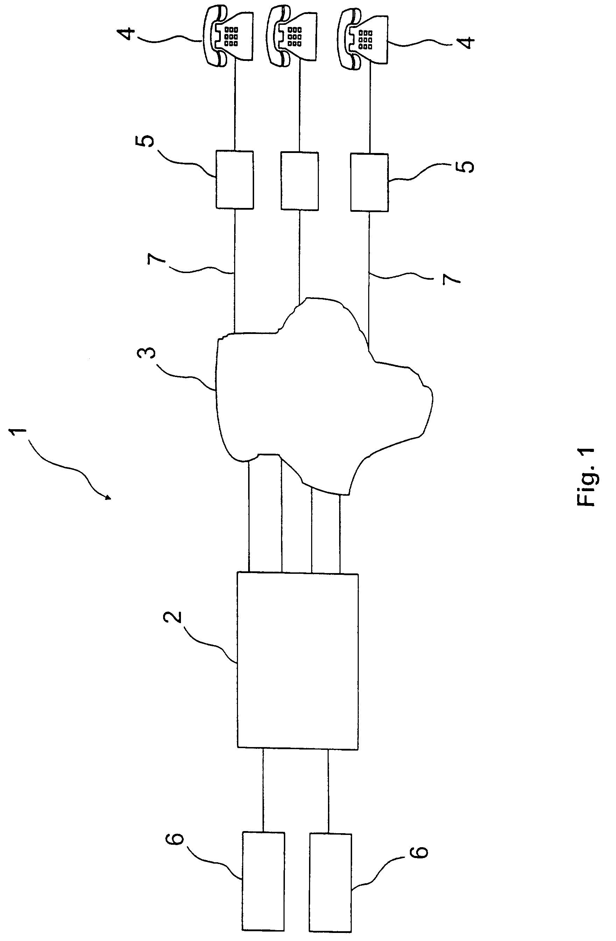

La figure 1 montre un réseau de diffusion de messages portant la référence générale 1 suivant l'invention, dans lequel un dispositif central 2 de collecte et de diffusion de messages (appelé ci-après "dispositif central 2") est relié, au moyen d'un réseau téléphonique 3 à un ensemble de postes téléphoniques 4 d'abonnés munis de dispositifs de réception 5.

Le réseau de diffusion de messages 1 ainsi que le dispositif central 2 sont gérés par un opérateur, qui est rémunéré pour ses services par une taxe prélevée auprès des producteurs de messages. Cette taxe est appelée ci-après "timbre téléphonique" et est déterminée en fonction du nombre de messages, de leur longueur, et des impératifs de traitement de ces messages par le dispositif central 2 ou par le dispositif de réception 5. Parmi les impératifs de traitement des messages par le dispositif central 2 est incluse la possibilité d'acheminer les messages à basse priorité au cours de la période creuse d'exploitation du réseau téléphonique 3.

Dans un mode de réalisation préféré de l'invention, l'opérateur couvre un territoire national. La couverture de plusieurs Etats est ou peut être assurée par plusieurs opérateurs nationaux.

Un ou plusieurs producteurs de messages transfèrent à l'opérateur du dispositif central 2 un ensemble de messages à diffuser. Ce transfert est effectué à partir des sources de messages 6, qui sont les infrastructures informatiques des producteurs de messages, et peut se faire par exemple par transfert de fichiers par tout moyen approprié, tel que le réseau Internet. Les producteurs de messages peuvent être par exemple une organisation de vente par correspondance adressant des informations commerciales à ses clients, une banque adressant des informations de situation et de mouvements de compte à ses clients, un agent de change diffusant des informations boursières. Le mode de transfert de ces messages peut prendre diverses formes sans sortir du cadre de l'invention et peut être effectué par exemple par transfert d'un fichier sur un support magnétique ou par une liaison de données. Dans le cas de l'envoi répétitif de données variables à un ensemble fixe de destinataires, les données variables peuvent être transmises périodiquement, la liste des destinataires étant mémorisée dans le dispositif central 2. Une telle situation s'applique par exemple lors du transfert quotidien de cours de bourse, ou de données météorologiques, à un ensemble de destinataires.

En variante, les producteurs de messages pourront adresser les messages à l'opérateur en utilisant le courrier électronique. Le mécanisme d'adressage est le suivant : dans la mesure où le destinataire est connu par son numéro d'appel téléphonique, une adresse de courrier électronique sera par exemple constituée sous la forme classique
**〈numéro du destinataire〉@〈nom de l'opérateur〉.〈code national de l'opérateur〉**.

A titre d'illustration, pour envoyer un message a l'abonné dont le numéro de téléphone en France est le 01.78.79.80.81, par l'intermédiaire de l'opérateur (de nom fictif) e-tel, on adressera un message de courrier électronique à l'adresse **0178798081@e-tel.fr** .

La gestion de messages à adresser dans le monde pourra de même être assurée par un opérateur international. Celui-ci transférera à l'opérateur national concerné les messages qui lui sont adressés. Dans ce cas, les adresses de courrier électronique pourront prendre la forme
**〈préfixe international〉〈numéro du destinataire〉@〈nom de l'opérateur〉.〈code international〉**

A titre d'exemple, pour envoyer un message à l'abonné dont le numéro de téléphone en France, muni de son préfixe international, est le 00.33.1.78.79.80.81, par l'intermédiaire de l'opérateur e-tel, on adressera un message de courrier électronique à l'adresse **0033178798081@e-tel com** .

Le dispositif central 2 comprend un ordinateur muni de lignes de transfert de données sur le réseau téléphonique 3. Cet ordinateur est programmé pour former un appel téléphonique à chaque destinataire de message, détecter la disponibilité de la ligne, s'identifier, de manière à ce que le dispositif de réception 5 puisse discriminer les types de messages entrant, et transférer le ou les messages.

Dans le cas où le réseau téléphonique 3 est un réseau analogique, ce transfert s'effectue par modulation suivant un protocole tel que par exemple V.21, V.22, V22bis, Bell 212A ou Bell 103. Dans le cas où le réseau téléphonique 3 est un réseau numérique RNIS, ce transfert est effectué de façon préférentielle sur le canal D ou sur un canal B si nécessaire.

Plusieurs modes de discrimination peuvent être réalisés, ainsi qu'on le décrira ci-après.

Dans une variante préférée de l'invention, le message consiste en données alphanumériques. Le transfert de ces données peut être réalisé en utilisant un modem conforme à un protocole normalisé de transfert de données. Cette solution requiert bien entendu que le dispositif de réception 5 comporte également un tel modem. Lorsque le réseau téléphonique 3 est un réseau analogique, un modem intégré approprié à l'usage dans un dispositif de réception 5 est le SSI 73K224 produit par la société Silicon System. Il permet la transmission et la réception, en mode full-duplex, d'informations binaires selon des protocoles normalisés bien connus tels que par exemple V.21, V.22, V22bis, Bell 212A ou Bell 103. Son faible coût permet de réaliser un dispositif de réception 5 de manière économique. Une interface de ligne, telle que le TEA 1061 produit par la société Philips, permet d'adapter les caractéristiques des signaux électriques émis et reçus sur la ligne téléphonique 7, en fonction des différentes recommandations nationales.

Lorsque le réseau téléphonique 3 est un réseau numérique RNIS, les circuits intégrés tels que par exemple les 29C53 et 80C152 de INTEL permettent la construction de l'interface de ligne et de réception de données.

Les messages fournis par les sources de messages 6 sont accompagnés d'attributs identifiant le type de traitement à leur réserver. On aura par exemple des messages non-urgents, qui seront envoyés par l'opérateur, éventuellement groupés, au moment où le réseau téléphonique est peu occupé. Ces messages seront grevés d'un timbre téléphonique modique. Au contraire, des messages urgents seront acheminés immédiatement et feront l'objet d'un timbre téléphonique plus important. C'est néanmoins toujours le producteur de messages qui rémunère l'opérateur.

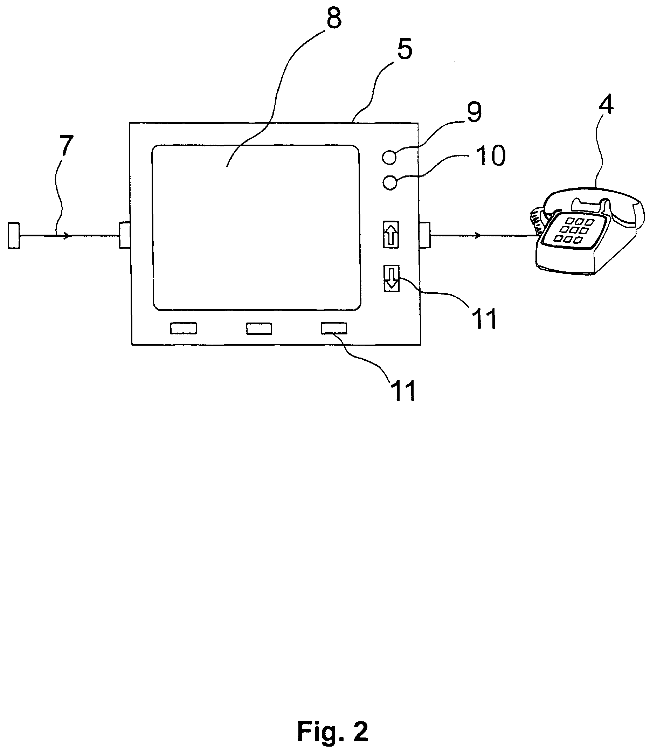

La figure 2 montre une installation téléphonique d'un abonné, dans laquelle un dispositif de réception 5 est relié à une ligne téléphonique 7. Le poste téléphonique 4 est relié au dispositif de réception 5. Le dispositif de réception 5 dispose d'un écran d'affichage 8. Celui-ci peut être par exemple du type à cristaux liquides, et permettre l'affichage de 4 lignes de 40 caractères. Ce dispositif de réception 5 comporte également des témoins 9,10 constitués par exemple de diodes électroluminescentes. Les fonctions des dits témoins peuvent comprendre : l'indication 9 qu'un message a été reçu depuis la dernière consultation de messages; l'indication 10 qu'un message est en cours de réception. Il comprend une unité de traitement et une mémoire.

Des touches-fonction 11 permettent à l'abonné de commander le fonctionnement de l'appareil. Deux touches-fonction 11 permettent de faire défiler verticalement une liste ou un message sur l'écran d'affichage 8. D'autres touches-fonction 11 ont une fonction qui dépend de l'état du dispositif de réception 5 , et qui est affichée sur l'écran d'affichage 8. Ces fonctions peuvent être par exemple "Validation" ou "Effacement".

Lorsqu'un appel téléphonique est adressé à un abonné dont l'installation comporte un dispositif de réception 5, celui-ci réagit de la manière suivante : il inhibe la sonnerie du poste téléphonique 4, et détermine s'il s'agit d'un appel porteur d'un message, provenant d'un dispositif central 2, ou d'un appel téléphonique ordinaire. Une manière préférée de faire la discrimination entre ces deux types d'appel est basée sur le numéro de téléphone de l'appelant c'est à dire du dispositif central 2. Ce numéro de téléphone peut être transmis par un message sous forme de "Frequency shift keying"(FSK) pendant les sonneries d'appel, lorsque le réseau téléphonique 3 est un réseau analogique qui comporte des centraux téléphoniques disposant de cette fonctionnalité, conforme à la norme ETSI DE/NA-010023. Lorsque le réseau téléphonique est un réseau numérique RNIS, cette identification peut se faire en utilisant le décodage du "Call Line Identification Presentation" (CLIP) par le dispositif de réception 5.

En variante, lorsque le réseau téléphonique est un réseau analogique ne disposant pas des fonctionnalités précitées, le dispositif central 2 peut transmettre une tonalité particulière identifiant le type d'appel.

L'inhibition de la sonnerie du poste téléphonique 4 est un élément essentiel par lequel des messages peuvent être adressés la nuit sans pour autant alarmer leurs destinataires. La propriété de signaler la réception d'un message par une sonnerie du poste téléphonique 4 peut être un attribut du message, mais peut également être obtenue par programmation du dispositif de réception 5. Celui-ci pourra également être programmé de manière à avertir l'utilisateur que des messages ont été reçus pendant la nuit, par une sonnerie émise à une heure appropriée.

Lorsque l'appel n'est pas issu d'un dispositif central 2, le dispositif de réception 5 achemine naturellement l'appel au poste téléphonique 4, qui réagit de manière habituelle. Ce poste peut, sans que cela présente la moindre difficulté, comporter un répondeur téléphonique ,un appareil de télécopie, une centrale téléphonique privée, ou tout autre appareil de péritéléphonie.

Lorsque l'appel entrant est porteur d'un message, ce message est mémorisé dans le dispositif de réception 5, et un témoin 9 indique qu'un nouveau message est enregistré.

Durant le transfert d'un message au dispositif de réception 5, la formation d'un appel par l'utilisateur du poste téléphonique 4 est inhibée. De plus, un témoin 10 lui indique qu'un tel transfert est en cours. Le transfert de messages étant de faible durée, cette limitation de l'usage du poste téléphonique 4 est un inconvénient mineur. Une fonctionnalité peut cependant être prévue, permettant à l'abonné d'interrompre un transfert de messages en cours, par exemple afin de former un appel prioritaire urgent. Une telle fonctionnalité peut être réalisée par l'envoi, par le dispositif de réception 5, au dispositif central 2, d'un message demandant l'interruption de la communication, lorsque l'abonné décroche son combiné pendant un temps déterminé.

Dans l'exemple ci-dessus, on a décrit une application dans laquelle les messages sont une suite de caractères alphanumériques destinés à être affichés et lus. On peut cependant, sans sortir du cadre de l'invention, réaliser des applications très diverses. Les messages peuvent contenir des données graphiques ou audio, auquel cas le dispositif de réception 5 comprendra des moyens pour en assurer la restitution. De tels moyens peuvent être obtenus par branchement sur un poste de télévision. On peut également faire assurer au dispositif de réception 5 une fonction dans une application domotique, telle que la mise en marche ou l'extinction d'éclairage, ou la régulation de paramètres de chauffage ou de ventilation, à partir d'un poste central. Dans ce cas, le dispositif de réception 5 comprendra des organes de sortie aptes à transférer les dites commandes.

Dans la méthode de diffusion de messages suivant l'invention, les producteurs de messages et l'opérateur du réseau de diffusion de messages 1 ne doivent connaître que le numéro d'appel des destinataires des messages. Cependant, pour éviter de tenter d'envoyer des messages à destination de numéros non munis d'un dispositif de réception 5, il sera avantageux qu'ils puissent tenir à jour une liste des numéros d'appel munis d'un tel dispositif. A cette fin, on peut procéder comme suit lors de l'installation d'un nouveau dispositif de réception 5 chez un abonné :
- On installe le dispositif de réception 5;
- On forme un appel téléphonique à destination du dispositif central 2;
- Le dispositif de réception 5 envoie alors un message d'identification au dispositif central 2;
- Le dispositif central 2 mémorise le fait que l'abonné dispose d'un dispositif de réception 5;
- Le dispositif de réception 5 mémorise le numéro d'appel du dispositif central 2, afin de pouvoir l'identifier.

En variante, l'initialisation et la configuration du dispositif de réception 5 peut être réalisée par un appel de l'abonné à un dispositif de messagerie vocale interactive, auquel l'abonné transmet son numéro d'appel, la langue préférentielle dans laquelle il souhaite recevoir des messages, et un code secret de décodage de messages encryptés.

Grâce à l'unité de traitement et la mémoire incluses dans le dispositif de réception 5, il est possible d'y réaliser de nombreuses fonctionnalités, dont des exemples sont cités ci-après.

Le dispositif d'affichage peut afficher les numéros d'appel des derniers appels entrant.

Il est possible de recevoir des messages encryptés, et de les décrypter en encodant une clé numérique au moyen du clavier du poste téléphonique 4. Cette fonctionnalité, combinée à la fonctionnalité de message de réponse, permet des applications de validations de payements sécurisés dans le cadre de payements électroniques.

La date et l'heure atomique courantes peuvent être affichées et mises à jour par le dispositif central 2, lors de chaque envoi de messages.

Il est possible de trier les messages reçus suivant leur type, et de les afficher suivant des critères variables, au gré de l'utilisateur.

Des critères d'effacement de messages anciens peuvent être définis par l'utilisateur, ou par des attributs des dits messages.

Les messages peuvent comprendre un signal sonore ou une mélodie, qui sera restituée lors de la lecture du dit message, par exemple au moyen d'un buzzer.

L'énumération ci-dessus n'est pas limitative, et on comprendra que, au moyen du réseau de diffusion de messages suivant l'invention 1, de nombreuses applications peuvent être conçues, permettant de fournir à un abonné disposant d'un poste téléphonique 4 ordinaire, les fonctionnalités riches d'un appareil moderne.

## Revendications

1. Réseau de diffusion de messages (1) caractérisé en ce qu'il comprend
- un ensemble de une ou plusieurs sources (6) de messages susceptibles d'être gérées par un ou des producteurs de messages,
- un dispositif central (2) de collecte et d'envoi de messages, susceptible d'être géré par un opérateur,
- un réseau téléphonique (3),
- un ensemble de dispositifs de réception de messages (5) reliés chacun d'une part à une ligne téléphonique (7) d'un abonné au dit réseau téléphonique (3), et d'autre part à un poste téléphonique (4) du dit abonné.

2. Méthode d'exploitation d'un réseau de diffusion de messages (1) à destination d'abonnés du téléphone suivant la revendication 1, dans laquelle une ou plusieurs sources de messages (6) fournissent des messages à un dispositif central (2), et comprenant les étapes suivantes:
- un producteur élabore un ensemble de messages à diffuser, chaque message étant accompagné d'un ou plusieurs numéros d'appel téléphonique de son ou ses destinataires, chaque message étant accompagné d'attributs qualifiant le type de traitement à effectuer par le dispositif central (2), et d'attributs qualifiant le type de traitement à effectuer par le ou les dispositifs de réception (5) destinataires;
- le dispositif central (2) collecte les messages à diffuser, et les mémorise dans une mémoire ;
- le dispositif central (2) transmet les messages à leurs destinataires;
- dans le cas ou le dispositif de réception (5) destinataire ne répond pas à l'appel, le dispositif central (2) mémorise le fait qu'une nouvelle tentative d'envoi doit être effectuée dans un délai déterminé.

3. Méthode suivant la revendication 2 caractérisée en ce que les messages consistent en données digitales et que la transmission des dits messages est effectuée sur une liaison téléphonique en utilisant un protocole normalisé de transmission de données.

4. Méthode suivant l'une quelconque des revendications 2 et 3 caractérisée en ce qu'un dispositif de réception (5) discrimine les appels téléphoniques issus d'un dispositif central (2) des autres appels téléphoniques

5. Méthode suivant la revendication 4 caractérisée en ce que la discrimination des appels téléphoniques comporte l'émission de signaux d'identification, par le dispositif central (2), après l'établissement d'une liaison téléphonique avec l'abonné.

6. Dispositif de réception (5) à travers un réseau téléphonique (3), de mémorisation et d'affichage de ces messages, relié d'une part à une ligne téléphonique (7), et d'autre part à un poste téléphonique d'abonné (4), et comportant
- des moyens aptes à répondre à un appel téléphonique entrant,
- des moyens aptes à inhiber la sonnerie du poste téléphonique (4) de l'abonné,
- des moyens aptes à discriminer si cet appel téléphonique entrant provient ou non d'un dispositif central (2),
- des moyens aptes à transférer un appel téléphonique ne provenant pas d'un dispositif central (2) vers le poste téléphonique d'abonné (4),
- des moyens aptes à mémoriser dans un moyen de mémoire le message transmis lors d'un appel porteur d'un message,
- des moyens aptes à afficher ou restituer le dit message.

7. Dispositif de réception (5) suivant la revendication 6 caractérisé en ce que le dit dispositif comprend des voyants destinés à informer l'utilisateur de l'état de celui-ci, ces états étant compris parmi
- l'indication qu'un message a été reçu depuis la dernière consultation ;
- l'indication qu'un message est en cours de réception.

8. Dispositif de réception (5) suivant l'une quelconque des revendications 6 et 7 caractérisé en ce que le dit dispositif est intégré au poste téléphonique (4) ou à sa périphérie pour former un seul appareil.

9. Dispositif de réception (5) suivant l'une quelconque des revendications 6 à 8 caractérisé en ce que le dit dispositif comporte des moyens permettant à l'abonné de former un appel téléphonique de manière habituelle.

10. Dispositif de réception (5) suivant l'une quelconque des revendications 6 à 9 caractérisé en ce que le dit dispositif comporte des moyens permettant à l'abonné d'interrompre la réception de messages en provenance du dispositif central (2) afin de former un appel téléphonique d'urgence.

11. Dispositif de réception (5) suivant l'une quelconque des revendications 6 à 10 caractérisé en ce que le dit dispositif comporte des moyens permettant à l'abonné de commander l'envoi d'un message de réponse correspondant à un message reçu.

12. Dispositif de réception (5) suivant la revendication 11 caractérisé en ce que le destinataire et le contenu du message de réponse sont élaborés à partir de données contenues dans le message reçu correspondant.

13. Dispositif central (2) de collecte de messages et d'envoi de ces messages, comprenant des moyens aptes à mémoriser un ensemble de messages et de leurs attributs, des moyens aptes à établir une liaison téléphonique ou de données à destination du poste téléphonique (4) d'un abonné, et des moyens aptes à transmettre un message ainsi que ses attributs vers l'abonné au moyen d'un réseau téléphonique (3).
